# EUROPEAN PATENT SPECIFICATION

(11) **EP 1 936 607 B1**
(45) Date of publication and mention of the grant of the patent: **25.07.2012**
(21) Application number: 07023884.5
(22) Date of filing: 10.12.2007
(51) Int. Cl.: G10L 15/22

(54) **Automated speech recognition application testing**
Überprüfung einer automatisierten Spracherkennungsanwendung
Test sur les applications de reconnaissance vocale automatique

(30) Priority: 22.12.2006 US 645305
(43) Date of publication of application: 25.06.2008
(73) Proprietor: SAP AG, 69190 Walldorf (DE)
(72) Inventor: Doyle, Sean, Mountain View CA 94043 (US)
(74) Representative: Müller-Boré & Partner Patentanwälte

(56) References cited:
- EP-A- 1 713 243
- EP-A- 1 860 862
- WO-A-03/021445
- WO-A-2004/010678
- WO-A-2005/038775
- US-A1- 2007 129 947
- US-B1- 6 622 121

## Description

### Technical Field

The inventive subject mater relates to speech recognition programs and, more particularly, automated speech recognition application testing.

### Background Information

Currently, human testers perform most testing of automatic speech recognition applications. These human testers typically manually place calls to a voice application and speak appropriate phrases, based on design specifications, into the application when prompted by the system for input. Such testing is a labor-intensive process. Further, it is difficult for testers to ensure all possible paths through the application are tested. Furthermore, errors and omissions can occur when a tester enters testing results into a report. As a result, automated speech recognition application testing is often not performed or not reported thoroughly or accurately.

Other testing involves strictly text based testing of voice applications. This testing involves using text log files of actual calls placed to a voice application and interacting with the voice application via text. This testing is used for purposes such as load testing and reproducing identified voice application errors. However, this text based testing, as with human testing, does not test an entire voice application.

Thus, current testing does not provide comprehensive testing of all functions of a voice application.

EP 1 713 243 A1 relates to an interactive speech recognition service, which is accessible by a client application through a service environment. The service provides specifications for speech data in a predefined format. The identified speech data is translated into the predefined format and an interactive speech service is automatically generated based on said data.

WO 2005/038775 A1 discloses a speech dialogue management system where each dialogue is capable of supporting one or more turns of conversation between a user and a virtual agent using a communication interface and/or a data interface. Scripts and dialog information is stored in a computer, each script determining the recognition, response and flow control in a dialog while an application running on the computer delivers result to the communication interface and/or data interface based on the dialogue information and user input.

US 6,622,121 B1 discloses a method and a system for testing speech recognition systems in which the speech recognition device to be tested is directly monitored in accordance with a text-to-speech device. The method comprises generating and storing a digital audio file from a reference text using the text-to-speech device. The digital audio file is later read using a speech recognition device to generate a decoded (or recognized) text representative of the reference text. The reference text and the decoded text are compared in an alignment operation and an error report representative of the recognition rate of the speech recognition device is finally generated.

### Brief Description of the Drawings

FIG. 1 is a block diagram of an example system embodiment.

FIG. 2 is a block diagram of an example system embodiment.

FIG. 3 is a block diagram of an example system embodiment.

FIG. 4 is an example graphical model of a voice application.

FIG. 5 is a block diagram of an example method embodiment.

FIG. 6 is a block diagram of an example method embodiment.

FIG. 7 is a block diagram of an example method embodiment.

### Detailed Description

The various embodiments described herein, provide systems, methods, and software to generate test applications, that when executed, test voice applications. In some embodiments, an individual test application may include several smaller test applications that test only portions of a voice application, but the sum of all the test applications will test an entire voice application. However, in some embodiments, a test application may be generated, or selected for execution, to test a subset of a larger voice application.

A test application that is generated to test a voice application may test various operations performed by a voice application. These operations may include fetching resources, such as documents, external grammars, and audio files, event handlers, such as no match, no input, help, and error handling, grammar accuracy, and voice application response time.

In some embodiments, a recursive algorithm executes to search for and identify all possible paths through a voice application, or a portion thereof. Such embodiments may also include an analyzer, which analyzes the "speak" and "listen" elements of the voice application to be tested. A generator then processes each of the identified voice application paths and analyzed speak and listen elements to produce and deploy a test application. The test application is then provided to a test executor and reporter, which runs the test application against the voice application to be tested and produces one or more voice application test reports.

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter. Such embodiments of the inventive subject matter may be referred to, individually and/or collectively, herein by the term "invention" merely for convenience and without intending to voluntarily limit the scope of this application to any single invention or inventive concept if more than one is in fact disclosed.

The following description is, therefore, not to be taken in a limited sense, and the scope of the inventive subject matter is defined by the appended claims.

The functions or algorithms described herein are implemented in hardware, software or a combination of software and hardware in one embodiment. The software comprises computer executable instructions stored on computer readable media such as memory or other type of storage devices. The term "computer readable media" is also used to represent carrier waves on which the software is transmitted. Further, such functions correspond to modules, which are software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

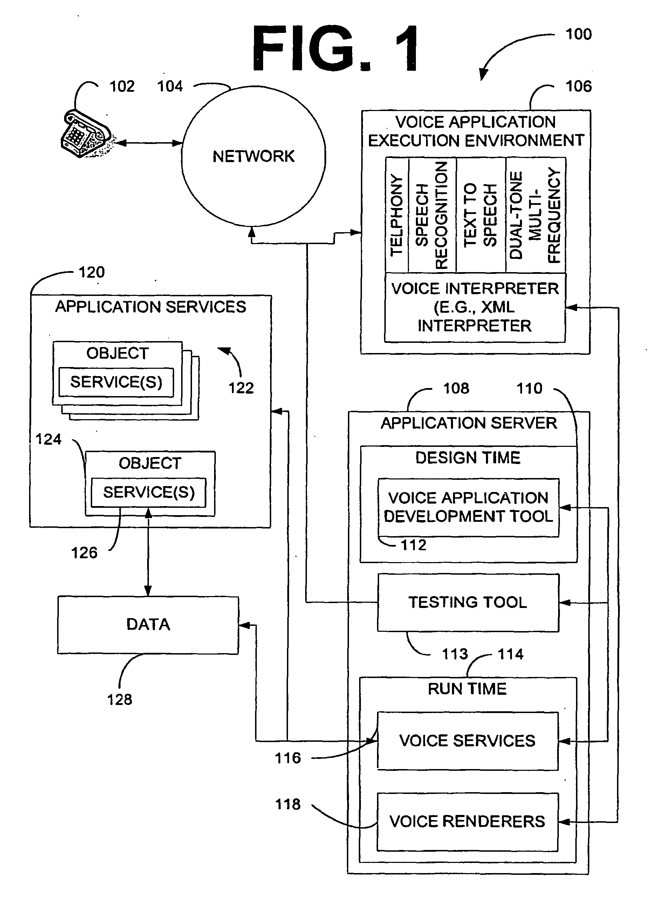

FIG. 1 is a block diagram of an example system 100 embodiment. In this embodiment, the system 100 includes a telephone 102 connected to a network 104. Also connected to the network 104 is a voice application execution environment 106. The voice application execution environment 106 is operatively coupled to a computing environment that includes an application server 108, application services 120, and data sources 128.

The telephone 102, in some embodiments, includes virtually any telephone such as a wired or wireless telephone. There may be one or more telephones 102. The network 104 includes one or more networks capable of carrying telephone signals between a telephone 102 and the voice application execution environment 106. Such networks may include one or more of a public switched telephone network (PSTN), a voice over Internet Protocol (VOIP) network, a local phone network, and other network types.

The voice application execution environment 106 includes an application execution environment within which a voice application providing interactive voice dialogues may execute to receive input and provide output over the network 104 while connected to a telephone 102. An example application execution environment 106 is available from VoiceObjects of San Mateo, California.

In some embodiments, the voice application execution environment 106 includes various components. Some such components include a telephone component to allow an application executing within the environment to connect to a telephone call over the network 104, and a speech recognition component to recognize voice input, a text to speech engine to generate spoken output as a function of text. The components may further include a dual-tone multi-frequency (DTMF) engine to receive touch-tone input and a voice interpreter to interpret programmatic data and provide data to the text to speech engine to generate spoken output and to provide grammars to the speech recognition component to recognize voice input.

The voice interpreter, in some embodiments, is an extensible Markup Language (XML) interpreter. In such embodiments, the voice interpreter includes, or has access to, one or more XML files that define voice prompts and acceptable grammars and DTMF inputs that may be received at various points in an interactive dialogue.

The application server 108 is an environment within which applications and application component can execute. The application server 108, in some embodiments, is a J2EE compliant application server 108 includes a design time environment 110, a runtime environment 114, and a testing tool 113.

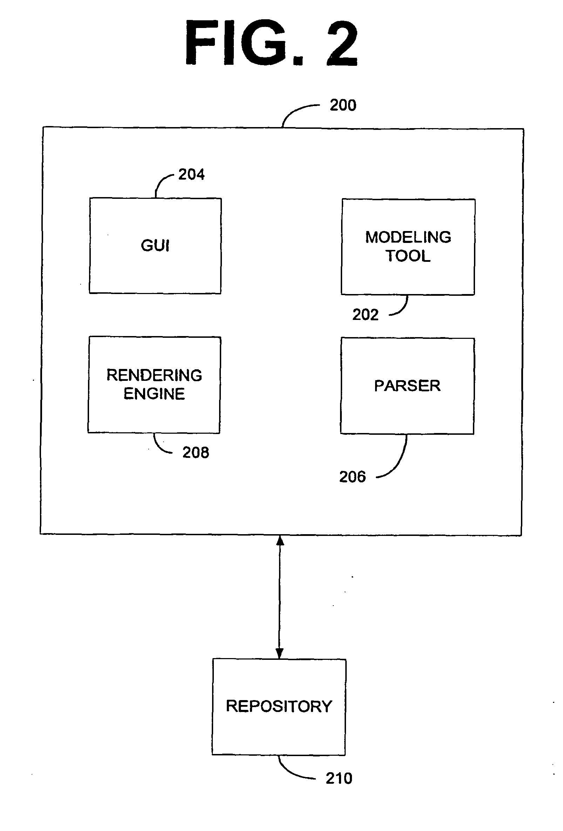

The design time environment includes a voice application development tool 112 that can be used to develop voice applications, such as an Interactive Voice Response (IVR) application that executes at least in part within the voice application execution environment 106. The voice application development tool 112 allows for graphical modeling of various portions of voice applications including grammars derived from data stored in one or more data sources 128. In some embodiments, the one or more data sources 128 include databases, objects 122 and 124, object 124 services 126, files, and other data stores. The voice application development tool 112 is described further with regard to FIG. 2 below.

The run time environment 114 includes voice services 116 and voice renderers 118. The voice services 116 and voice renderers 118, in some embodiments, are configurable to work in conjunction with the voice interpreter of the voice application execution environment 106 to provide XML documents to service interactive voice response executing programs. In some embodiments, the voice services access data from the application services 120 and from the data sources 128 to generate the XML documents.

The testing tool 113 is a tool that operates to automatically generate test applications that execute to test one or more voice applications developed using the voice application development tool 112. The testing tool 113 may be further operable to interface with an executing voice application to test the voice application. In some such embodiments, the testing tool 113 interfaces with an executing application over the network 104, directly to the voice application execution environment 106, or via the run time environment 114. In some embodiments, the testing tool 113 utilizes components of the voice application execution environment 106 to test voice applications, such as the text to speech and speech recognition components when generating voice application input or receiving voice application output.

FIG. 2 is a block diagram of an example system embodiment. The system includes a voice application development tool 200. The voice application development tool 200 of FIG. 2 is an example embodiment of the voice application development tool 112 of FIG. 1.

The voice application development tool 200 includes a modeling tool 202, a graphical user interface (GUI) 204, a parser 206, and a rendering engine 208. Some embodiments of the system of FIG. 2 also include a repository 210 within which models generated using the modeling tool 202 via the GUI 204 are stored.

The voice application development tool 200 enables voice applications to be modeled graphically and operated within various voice application execution environments by translating modeled voice applications into different target metadata representations compatible with the corresponding target execution environments. The GUI 204 provides an interface that allows a user to add and configure various graphical representations of functions within a voice application. In some embodiments, the modeling tool 202 allows a user to design a graphical model of a voice application by dragging and dropping icons into a graphical model of a voice application. The icons may then be connected to model flows between the graphical representations of the voice functions. When a graphical model of a voice application is saved, the graphical model is processed by the parser 206 to generate a metadata representation that describes the voice application. In some embodiments the voice application metadata representation is stored in the repository 210. The metadata representation may later be opened and modified using the modeling tool 202 and displayed in the GUI 204.

In some embodiments, the metadata representation of a voice application generated using the GUI 204 and the modeling tool 202 is stored as text formatted in XML. In some such embodiments, the metadata representation is stored in a format that can be processed by the rendering engine 208 to generate the metadata representation in a form required or otherwise acceptable to an application execution environment, such as VoiceXML or Visual Composer Language (VCL) which is an SAP proprietary format. In other embodiments, the metadata representation of a voice application may be formatted in an open standard markup language, such as VoiceXML or VCL.

As discussed above, the modeling tool 202 and the GUI 204 include various graphical representations of functions within a voice application that may be added and configured within a graphical model. The various graphical representations of functions within a voice application may include a graphical listen element. A graphical listen element is an element which allows modeling of a portion of a voice application that receives input from a voice application user, such as a caller. A graphical listen element includes a grammar that specifies what the user can say and will be recognized by the voice application.

The grammar of a graphical listen element may include one or more grammar types. Example grammar types include phrase, list, and field. A phrase is a word or phrase and is generally typed into a property listing of the graphical listen element. An example phrase is "yes" where the acceptable input is "yes." A list type includes a list of acceptable, or alternative, phrase types. For example, "yes," "yeah", "correct," and "that's right," may be acceptable alternative phrases in a particular graphical listen element. A field type refers to one or more fields of a data source, such as a database that provides acceptable inputs from a user.

A field type may include several properties, depending on the needs of the application. Some such properties identify the data source and data fields, any table or other data source joins, any required retrieval arguments to retrieve data, any filters necessary to remove unwanted data, and transformations to transform data into another form. For example, transformations are useful when the data includes an abbreviation such as "corp." or "Jr." Transformations can be defined in the graphical listen element properties to transform the data into "corporation" and "junior," respectively.

Thus, through use of the modeling tool 202 and the GUI 204, a voice application can be modeled and an encoded representation that can be utilized in a voice application execution environment can be created without manually coding the voice application. This reduces complexity and errors in coding voice applications and can reduce the time necessary to create, modify, and update voice applications.

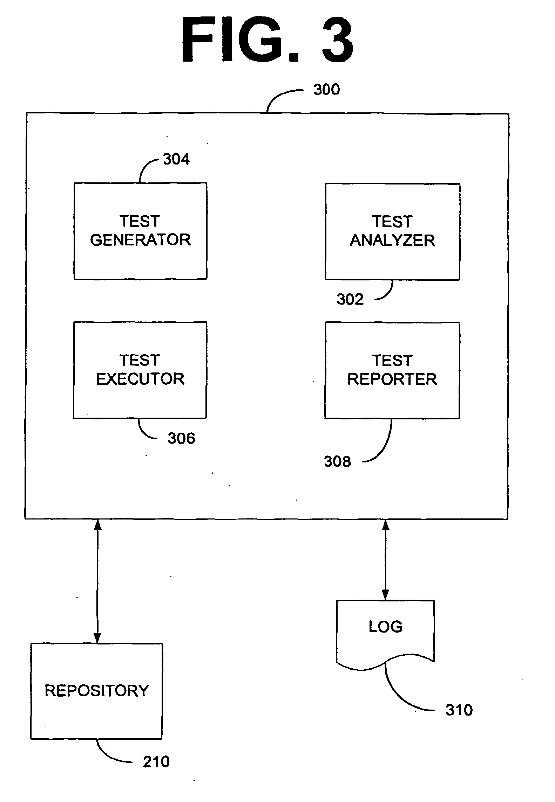

FIG. 3 is a block diagram of an example system embodiment. The system includes a testing tool 300. The testing tool 300 of FIG. 3 is an example embodiment of the testing tool 113 of FIG. 1. The testing tool includes a test analyzer 302, a test generator 304, a test executor 306, and a test reporter 308. In some embodiments, the test analyzer 302 and the test generator 304 are part of the same process. The test executor 306 and test reporter 308 may also be part of the same process.

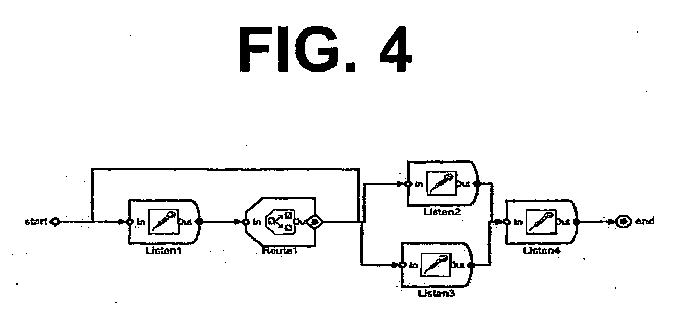

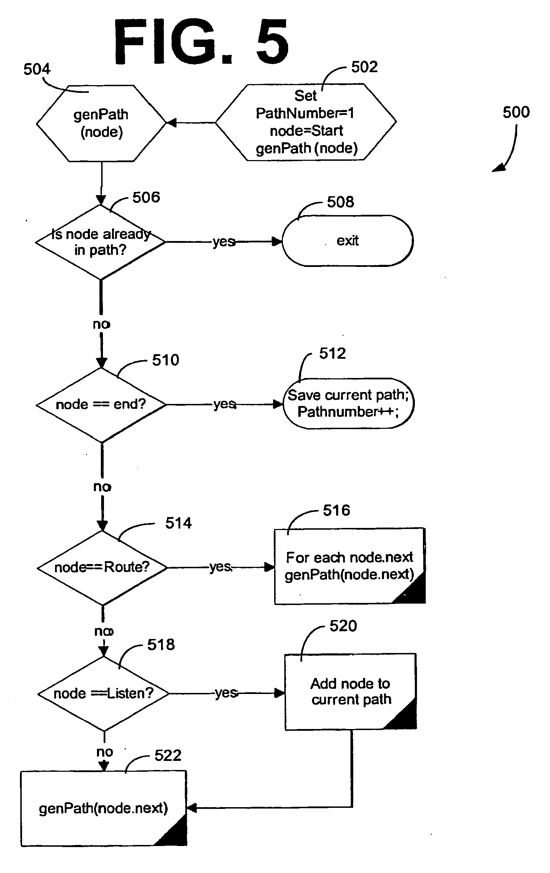

The test analyzer 302, in typical embodiments, accesses a representation of a voice application, such as a voice application metadata representation as discussed above with regard to FIG. 2, in the repository 210. The test analyzer 302, performs a modified recursive depth first search, to identify unique paths through a voice application. The goal of the test analyzer 302 is to identify all nodes in a voice application and all unique paths to and from each node. FIG. 4 and FIG. 5, and the description that follows, provides further detail of some embodiments of the test analyzer 302.

FIG. 4 is an example graphical model of a voice application. Automated speech recognition applications can be represented in a variety of ways, a flow diagram, such as that of FIG. 4, being one of the most common. Generally, an automated speech recognition application is represented by a sequence of elements which are executed in the order they are connected.

In some embodiments, for testing purposes, the goal is to ensure all nodes are tested. Thus, the test analyzer 302, in some embodiments, identifies at least the minimum set of all unique paths through the modeled voice application of FIG. 4. Thus, with regard to the voice application of FIG. 4, the set of paths is:
PATH1: start->Listen1->Route 1->Listen2->Listen4->end
PATH2: start-> Listen 1-> Route 1-> Listen3-> Listen4->end

A modified recursive depth first search yields the desired set of unique paths. The block diagram of FIG. 5 represents an example method, which when executed upon a representation of a voice application retrieved from the repository 210 of FIG. 2 and FIG. 3, generates the set of unique paths.

FIG. 5 is a block diagram of an example method 500 embodiment. In the following discussion of the method 500, assume a voice application consists of a connected sequence of nodes each with a single "node.next" field which is a link to the next node in the voice application. One exception is the route node which can have one or more next nodes.

The method 500 includes setting a path number equal to one (1) and finding a first node of the application 502 by looking at a node.next pointer of a start node. The first node is then evaluated 504 and a determination is made if the node is already in a path 506. If the node is already in a path, the method 500 exits 508. However, if the node is not in a path, a determination is made if the node is an end node 510. If the node is an end node, the current path is saved 512.

If the node is not an end node, a determination is made if the node is a route node 514. If the node is a route node, for each node.next pointer of the node, the node.next pointer is sent 516 to 504 and the method 500 processes each node and its respective path. If the node is not a route node, a determination is made if the node is a listen node 518. If the node is a listen node, the node is added to the current path and the node.next pointer is sent to 504. If the node is not a listen element, the node.next pointer of the node is sent to 504.

As a result of the method 500, all nodes except required listen nodes are stripped from the paths. Thus, paths generated by the method 500 when executing against the voice application represented in FIG. 4 would be:
PATH1: start->Listen 1 -> Listen2->Listen4
PATH2: start->Listen1-> Listen3->Listen4

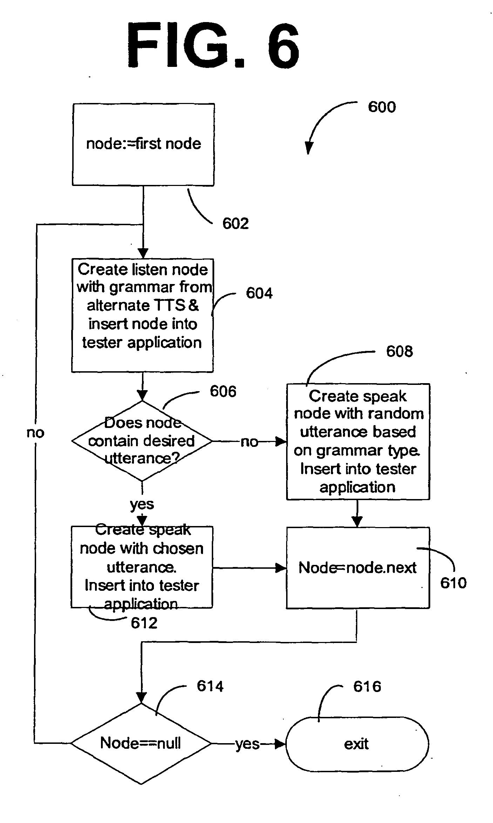

Returning to FIG. 3, the unique paths identified by the test analyzer 302 are then sent to the test generator 304. The test generator 304 takes these paths and creates a test application, which when executed, will test each unique path. To generate the test application, the test generator 304 evaluates each listen node to identify a grammar of the listen node and at least one prompt which indicates to a caller what they should say. For example, a prompt may say, "Tell me your four-digit user ID." The grammar of this specific listen node may then specify an expected input of digits having a minimum and maximum length of four. The test generator 304 in this example then creates a listen node in a test application to listen for the user ID prompt. The test generator then adds a speak element to provide input to the voice application under test with the expected input as defined in a grammar generated as a function of the listen element of the voice application under test. FIG. 6 provides more detail of an example method performed by the test generator.

FIG. 6 is a block diagram of an example method 600 embodiment. The method 600 include receiving input 602 identifying a first node of a unique voice application path. The method 600 then creates a listen node with a grammar from an alternate text to speech label on a speak element of a voice application and inserts the node into a tester application 604. A determination 606 is then made to determine if the added node identifies the desired utterance. If so, the method 600 creates a speak node with the proper utterance and the node is inserted into the test application 612. If the node does not identify the desired utterance, a speak node is created with a random utterance based on the grammar type of the node to be tested and the speak node is added to the test application 608. In both situations, a next node is then processed 610. A determination 614 is made if there is a next node. If there is, the method 600 returns to 604, otherwise, the method 600 exits 616.

Returning again to FIG. 3, as a result of the test generator 304 processing each unique path through a voice application to be tested, a test application is generated. The test application is a voice application, but is generated to execute against a voice application under test. In some embodiments, a generated test application may be viewed and manipulated graphically, just as a modeled application described above. In some embodiments, a test administrator may open a model of a test application and modify the test application. This may be useful in instances where the voice application under test may request a password or PIN to be input. The test application most likely will not know a proper password or PIN to gain access to log into the voice application. Thus, an administrator may modify a test application to add the PIN.

A test application may then be sent to or retrieved by the test executor 306. The test executor 306 connects to an outbound dialer and connects to an application under test. In some embodiments, test applications execute within a voice application execution environment, such as voice application execution environment 106 of FIG. 1. This allows the test applications to utilize the various components of the voice application execution environment, such as test-to-speech, speech recognition, and others.

During execution, the tester application starts out silent, just waiting to hear its first expected prompt and then generates a response. This sequence, silently waiting to hear a key phrase and then uttering a response, repeats until all elements of a test application have been executed by the test executor 306. In some embodiments, the test executor 306 logs results of each test in a log file 310 or other location. This log information can then be used by the test reporter 308 to generate testing reports. In some embodiments, logging is performed by a voice application execution environment which logs voice application activity. In some such embodiments, the test reporter 308 accesses the voice application execution environment log and generates reports from this data.

In some embodiments, the test executer 304 may execute a test application as text based tests. In such embodiments, rather than having a tester automated speech recognition system recognizing prompts spoken by the original system and generating responses using text-to-speech, the test executer 306 parses the text responses of the original system and submits input by assigning semantic values to variables and submitting those back to the voice application under test. In other words, the tests can run by "speaking" to each other or by passing text strings back and forth.

In some embodiments, due to the nature of speech recognition application, fault tolerance is built into test applications. In some embodiments, this is achieved by special configuration of a test application. For example, disabling the bargein functionality, which means the test application cannot be interrupted by the application under test. This overcomes the problem of having the two applications both talking at the same time or both listening at the same time. Some embodiments further include disabling "no match" and "no input" event handling within the application under test to force the test application to repeat the same utterance until it is recognized. This prevents problems where an event handling grammar is not expected or not recognizable by the test application. Some embodiments test applications are also configurable with regard to accents. A text to speech or speech recognition component may be configured for use with a test application to use a certain accent. Other options may be configurable within certain embodiments depending on the requirements for the specific embodiment.

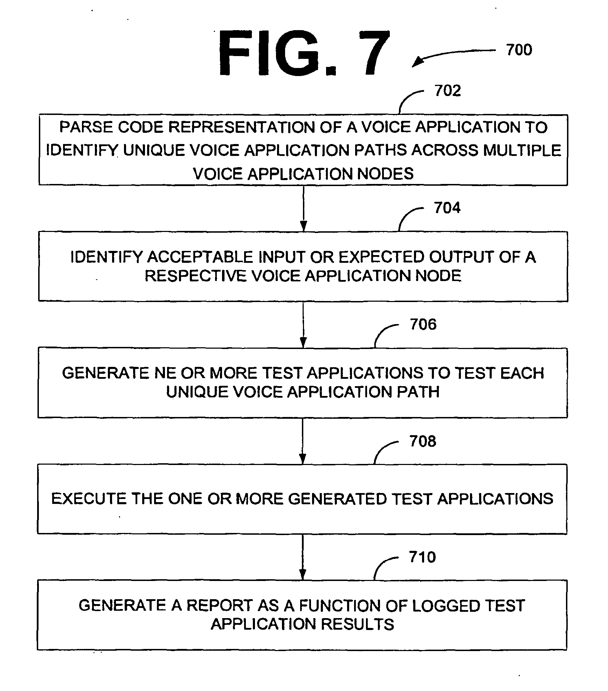

FIG. 7 is a block diagram of an example method 700 embodiment. The example method 700 includes parsing a code representation of a voice application to identify unique voice application paths across multiple voice application nodes 702, identifying acceptable input or expected output of a respective voice application node 704, and generating one or more test applications to test each unique voice application path 706. Some embodiments of the method 700 also include executing the one or more generated test applications 708 and generating a report as a function of logged test application results 710.

In some embodiments, the logged test results are logged by the one or more test applications. In other embodiments, the test results are logged within an application execution environment and the log is made available for reporting purposes from a storage location.

In some embodiments of the method 700, executing the one or more generated test applications includes reaching an input node during execution that requests user input. In some such embodiments, the method 700 includes prompting a user for the user input, receiving and caching the user input, and continuing to execute the one or more generated test applications by providing the received user input when the input node is reached.

The method 700 may encode the one or more generated test applications in extensible Markup Language.

In some embodiments of the method 700, identifying acceptable input or expected output of a respective voice application includes analysis. This analysis may include analyzing a grammar of a listen node to identify one or more acceptable inputs, if the node is a listen node or analyzing text to be provided to a text-to-speech engine to identify one or more expected outputs if the node is a speak node. Also, identifying an acceptable input may include identifying that an acceptable listen node input is not available within the voice application code representation, requesting a user input an acceptable input, and encoding a received user input as the acceptable input.

It is emphasized that the Abstract is provided to comply with 37 C.F.R. § 1.72(b) requiring an Abstract that will allow the reader to quickly ascertain the nature and gist of the technical disclosure. It is submitted with the understanding that it will not be used to interpret or limit the scope or meaning of the claims.

In the foregoing Detailed Description, various features are grouped together in a single embodiment to streamline the disclosure. This method of disclosure is not to be interpreted as reflecting an intention that the claimed embodiments of the invention require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

It will be readily understood to those skilled in the art that various other changes in the details, material, and arrangements of the parts and method stages which have been described and illustrated in order to explain the nature of this invention may be made without departing from the principles and scope of the invention as expressed in the subjoined claims.

## Claims

1. A method (500; 600; 700) for generating one or more test applications to test a voice application, wherein the voice application comprises a plurality of voice application nodes connected toeach other, so as to form a flow diagram, wherein said plurality of a voice application nodes comprises at least one listen node, representing a portion of the voice application that receives an input from a voice application user,
said method **characterized by** comprising:
parsing (702) a graphical model of the voice application to generate code representation of the voice application and performing a modified recursive depth first search of the code representation to identify all unique voice application paths across the multiple voice application nodes;
identifying (704) acceptable input or expected output of a respective voice application node; and
generating (706) one or more test applications to test each unique voice application path,
wherein said identifying and generating step comprise:
evaluating each listen node in each identified path to identify a grammar of the listen node and at least one prompt which indicates to a caller what they should say;
creating a listen node in the test application to listen for the at least one prompt; and
adding a speak element to the test application, said speak element providing an input to the voice application under test with the expected input as defined in a grammar generated as a function of the at least one listen node of the voice application under test, wherein said input is generated using text-to-speech.

2. The method (500; 600; 700) of claim 1, further comprising:
executing (708) the one or more generated test applications; and
generating (710) a report as a function of logged test application results.

3. The method (500; 600; 700) of claim 2, wherein the logged test results are logged by the one or more test applications.

4. The method (500; 600; 700) of claim 2 or 3, wherein executing the one or more generated test applications includes reaching an input node during execution that requests user input, the method further comprising:
prompting a user for the user input;
receiving and caching the user input; and
continuing to execute the one or more generated test applications by providing the received user input when the input node is reached.

5. The method (500; 600; 700) of any one of the preceding claims, wherein the one or more generated test applications are encoded in extensible Markup Language.

6. The method (500; 600; 700) of any one of the preceding claims, wherein the code representation of the voice application is expressed in extensible Markup Language.

7. The method (500; 600; 700) of any one of the preceding claims, wherein identifying an acceptable input includes:
identifying that an acceptable listen node input is not available within the voice application code representation;
requesting a user input an acceptable input; and
encoding a received user input as the acceptable input.

8. The method of claim 7, wherein the acceptable listen node input is a password.

9. A system **characterised by** comprising:
a parser (206) configured to parse a graphical model of one or more voice applications to generate a representation of the one or more voice applications, wherein each of the one or more voice applications comprises a plurality of voice application nodes connected to each other, so as to form a flow diagram, wherein said plurality of a voice application nodes comprises at least one listen node, representing a portion of the voice application that receives an input from a voice application user;
a memory device (210) holding the representation of said one or more voice applications;
a testing tool (113; 300) including:
a test analyzer (302) configured to perform a modified recursive depth first search on said representation of the one or more voice applications to identify all unique paths through the nodes of the one or more voice applications stored held in the memory device; and
a test generator (304) to generate one or more test applications to test each identified unique path through the nodes of the one or more voice applications,
wherein said test generator (304) is configured to:
evaluate each listen node in each identified path to identify a grammar of the listen node and at least one prompt which indicates to a caller what they should say;
create a listen node in the test application to listen for the at least one prompt; and
add a speak element to the test application, said speak element providing an input to the voice application under test with the expected input as defined in a grammar generated as a function of the listen element of the voice application under test, wherein said input is generated using text-to-speech.

10. The system of claim 9, wherein the memory device is a hard disk.

11. The system of claim 9 or 10, wherein the test analyzer (302) identifies only listen nodes of the one or more voice applications.

12. The system of any one of claims 9 to 11, wherein the test generator (304) causes the one or more generated test applications to be stored in the memory device (210).

13. A machine-readable medium, with instructions thereon, which when executed cause a machine to perform the method according to anyone of claims 1 to 8.

## Patentansprüche

1. Verfahren (500; 600; 700) zum Generieren einer oder mehrerer Testanwendungen, um eine Sprachanwendung zu testen, wobei die Sprachanwendung eine Mehrzahl von Sprachanwendungsknoten umfasst, die miteinander verbunden sind, um ein Flussdiagramm zu bilden, wobei die Mehrzahl von Sprachanwendungsknoten zumindest einen Hören-Knoten umfasst, der einen Abschnitt der Sprachanwendung darstellt, der eine Eingabe von einem Sprachanwendungsnutzer empfängt,
wobei das Verfahren **dadurch gekennzeichnet ist, dass** es umfasst:
Parsen (702) eines graphischen Modells der Sprachanwendung, um Codedarstellung der Sprachanwendung zu generieren, und Durchführen einer modifizierten, rekursiven ersten Tiefen- bzw. Höhensuche der Codedarstellung, um alle eindeutigen Sprachanwendungspfade über die mehreren Sprachanwendungsknoten zu identifizieren;
Identifizieren (704) einer akzeptablen Eingabe oder erwarteten Ausgabe eines jeweiligen Sprachanwendungsknotens; und
Generieren (706) einer oder mehrerer Testanwendungen, um jeden eindeutigen Sprachanwendungspfad zu testen,
wobei der Identifizieren- und Generieren-Schritt umfasst bzw. umfassen:
Auswerten jedes Hören-Knotens in jedem identifizierten Pfad, um eine Grammatik des Hören-Knotens und zumindest eine Aufforderung zu identifizieren, die einem Anrufer angibt bzw. anzeigt, was er sagen soll;
Erzeugen eines Hören-Knotens in der Testanwendung, um die zumindest eine Aufforderung zu hören; und
Hinzufügen eines Sprachelements zu der Testanwendung, wobei das Sprachelement eine Eingabe zu der zu testenden Sprachanwendung bereitstellt, und zwar mit der erwarteten Eingabe, wie in einer Grammatik definiert, die als eine Funktion des zumindest einen Hören-Knotens der zu testenden Sprachanwendung generiert wird, wobei die Eingabe unter Verwendung von Text-zu-Sprache generiert wird.

2. Verfahren (500; 600; 700) nach Anspruch 1, ferner umfassend:
Ausführen (708) der einen oder mehreren generierten Testanwendungen; und
Generieren (710) eines Berichts als eine Funktion der protokollierten Testanwendungsergebnisse.

3. Verfahren (500; 600; 700) nach Anspruch 2, wobei die protokollierten Testergebnisse durch die eine oder die mehreren Testanwendungen protokolliert werden.

4. Verfahren (500; 600; 700) nach Anspruch 2 oder 3, wobei das Ausführen der einen oder mehreren generierten Testanwendungen das Erreichen eines Eingabeknotens während der Ausführung beinhaltet, die bzw. der eine Benutzereingabe verlangt bzw. ersucht, wobei das Verfahren ferner umfasst:
Auffordern eines Benutzers zur Benutzereingabe;
Empfangen und speichern bzw. cache-speichern der Benutzereingabe; und
Fortfahren, die eine oder die mehreren generierten Testanwendungen auszuführen, und zwar durch Bereitstellen der empfangenen Benutzereingaben, wenn der Eingabeknoten erreicht wird.

5. Verfahren (500; 600; 700) nach einem der vorhergehenden Ansprüche, wobei die eine oder die mehreren generierten Testanwendungen in Extensible Markup Language codiert sind.

6. Verfahren (500; 600; 700) nach einem der vorhergehenden Ansprüche, wobei die Codedarstellung der Sprachanwendung in Extensible Markup Language ausgedrückt ist.

7. Verfahren (500; 600; 700) nach einem der vorhergehenden Ansprüche, wobei das Identifizieren einer akzeptablen Eingabe beinhaltet:
Identifizieren, dass eine akzeptable Hören-Knoten-Eingabe nicht innerhalb der Sprachanwendung-Codedarstellung verfügbar ist;
Anfordern einer Benutzereingabe eine bzw. einer akzeptablen Eingabe; und
Codieren einer empfangenen Benutzereingabe als die akzeptable Eingabe.

8. Verfahren nach Anspruch 7, wobei die akzeptable Hören-Knoten-Eingabe ein Passwort ist.

9. System, **dadurch gekennzeichnet, dass** es umfasst:
einen Parser (206), der konfiguriert ist, ein graphisches Modell einer oder mehrerer Sprachanwendungen zu parsen, um eine Darstellung der einen oder mehreren Sprachanwendungen zu generieren, wobei jede der einen oder mehreren Sprachanwendungen eine Mehrzahl von Sprachanwendungsknoten umfasst, die miteinander verbunden sind, um ein Flussdiagramm zu bilden, wobei die Mehrzahl von Sprachanwendungsknoten zumindest einen Hören-Knoten umfasst, der einen Abschnitt der Sprachanwendung darstellt, der eine Eingabe von einem Sprachanwendungsnutzer empfängt,
eine Speichervorrichtung (210), welche die Darstellung der einen oder mehreren Sprachanwendungen hält;
ein Testwerkzeug bzw. -tool (113; 300), enthaltend:
einen Testanalysierer (302), der konfiguriert ist, um eine modifizierte, rekursive erste Tiefen- bzw. Höhensuche der Darstellung der einen oder mehreren Sprachanwendungen durchzuführen, um alle eindeutigen Sprachanwendungspfade durch die Knoten der einen oder mehreren Sprachanwendungen zu identifizieren, die in der Speichervorrichtung gespeichert gehalten sind; und
einen Testgenerator (304), um eine oder mehrere Testanwendungen zu generieren, um jeden identifizierten eindeutigen Pfad durch die Knoten der einen oder mehreren Sprachanwendungen zu testen,
wobei der Testgenerator (304) konfiguriert ist:
jeden Hören-Knoten in jedem identifizierten Pfad zu identifizieren, um eine Grammatik des Hören-Knotens und zumindest eine Aufforderung zu identifizieren, die einem Anrufer angibt bzw. anzeigt, was er sagen soll;
einen Hören-Knoten in der Testanwendung zu erzeugen, um die zumindest eine Aufforderung zu hören; und
ein Sprachelement zu der Testanwendung hinzuzufügen, wobei das Sprachelement eine Eingabe zu der zu testenden Sprachanwendung bereitstellt, und zwar mit der erwarteten Eingabe, wie in einer Grammatik definiert, die als eine Funktion des Hören-Elements der zu testenden Sprachanwendung generiert wird, wobei die Eingabe unter Verwendung von Text-zu-Sprache generiert wird.

10. System nach Anspruch 9, wobei die Speichervorrichtung eine Festplatte ist.

11. System nach Anspruch 9 oder 10, wobei der Testanalysierer (302) nur Hören-Knoten der einen oder mehreren Sprachanwendungen identifiziert.

12. System nach einem der Ansprüche 9 bis 11, wobei der Testgenerator (304) veranlasst, dass die eine oder die mehreren generierten Testanwendungen in der Speichervorrichtung (210) gespeichert werden.

13. Maschinenlesbares Medium mit Instruktionen darauf, die, wenn sie ausgeführt werden, eine Maschine veranlassen, das Verfahren nach einem der Ansprüche 1 bis 8 durchzuführen.

## Revendications

1. Procédé (500 ; 600 ; 700) de génération d'une ou plusieurs applications test pour tester une application vocale, dans lequel l'application vocale comprend une pluralité de noeuds d'application vocale connectés les uns aux autres de manière à former un organigramme, dans lequel ladite pluralité de noeuds d'application vocale comprend au moins un noeud d'écoute représentant une portion de l'application vocale qui reçoit une entrée d'un utilisateur de l'application vocale, ledit procédé étant **caractérisé par** le fait de comprendre :
l'analyse syntaxique (702) d'un modèle graphique de l'application vocale pour générer une représentation de code de l'application vocale et la réalisation d'une première recherche de profondeur récursive modifiée de la représentation de code pour identifier l'ensemble des chemins d'application vocale uniques en travers des multiples noeuds d'application vocale ;
l'identification (704) d'une entrée acceptable ou d'une sortie attendue d'un noeud d'application vocale respectif ; et
la génération (706) d'une ou plusieurs applications test pour tester chaque chemin d'application vocale unique,
dans lequel lesdites étapes d'identification et de génération comprennent :
l'évaluation de chaque noeud d'écoute dans chaque chemin identifié pour identifier une grammaire du noeud d'écoute et au moins une invite qui indique à un appelant ce qu'il devrait dire ;
la création d'un noeud d'écoute dans l'application test pour écouter à la recherche de l'au moins une invite ; et
l'ajout d'un élément de parole à l'application test, ledit élément de parole fournissant une entrée vers l'application vocale en cours de test avec l'entrée attendue telle que définie dans une grammaire générée en tant que fonction de l'au moins un noeud d'écoute de l'application vocale en cours de test, dans lequel ladite entrée est générée en utilisant une synthèse de la parole à partir du texte.

2. Procédé (500 ; 600 ; 700) selon la revendication 1, comprenant en outre :
l'exécution (708) de la ou des applications test générées ; et
la génération (710) d'un rapport en tant que fonction de résultats d'application test enregistrés.

3. Procédé (500 ; 600 ; 700) selon la revendication 2, dans lequel les résultats de test enregistrés sont enregistrés par la ou les applications test.

4. Procédé (500 ; 600 ; 700) selon la revendication 2 ou 3, dans lequel l'exécution de la ou des applications test générées inclut l'atteinte d'un noeud d'entrée au cours de l'exécution qui requiert une entrée d'utilisateur, le procédé comprenant en outre :
l'invitation d'un utilisateur pour l'entrée d'utilisateur ;
la réception et la mise en antémémoire de l'entrée d'utilisateur ; et
la continuation de l'exécution de la ou des applications test générées en fournissant l'entrée d'utilisateur reçue lorsque le noeud d'entrée est atteint.

5. Procédé (500 ; 600 ; 700) selon l'une quelconque des revendications précédentes, dans lequel la ou les applications test générées sont encodées en langage XML.

6. Procédé (500 ; 600 ; 700) selon l'une quelconque des revendications précédentes, dans lequel la représentation de code de l'application vocale est exprimée en langage XML.

7. Procédé (500 ; 600 ; 700) selon l'une quelconque des revendications précédentes, dans lequel l'identification d'une entrée acceptable inclut :
l'identification qu'une entrée de noeud d'écoute acceptable n'est pas disponible au sein de la représentation de code d'application vocale ;
la requête d'une entrée d'utilisateur d'une entrée acceptable ; et
l'encodage d'une entrée d'utilisateur reçue en tant qu'entrée acceptable.

8. Procédé selon la revendication 7, dans lequel l'entrée de noeud d'écoute acceptable est un mot de passe.

9. Système **caractérisé par** le fait de comprendre :
un analyseur syntaxique (206) configuré pour analyser syntaxiquement un modèle graphique d'une ou plusieurs applications vocales afin de générer une représentation de la ou des applications vocales, dans lequel chacune de la ou des applications vocales comprend une pluralité de noeuds d'application vocale connectés les uns aux autres de manière à former un organigramme, dans lequel ladite pluralité de noeuds d'application vocale comprend au moins un noeud d'écoute représentant une portion de l'application vocale qui reçoit une entrée d'un utilisateur de l'application vocale ;
un dispositif de mémoire (210) contenant la représentation desdites une ou plusieurs applications vocales ;
un outil de test (113 ; 300) incluant :
un analyseur test (302) configuré pour réaliser une première recherche de profondeur récursive modifiée sur ladite représentation de la ou des applications vocales afin d'identifier l'ensemble des chemins uniques à travers les noeuds de la ou des applications vocales stockées contenues dans le dispositif de mémoire ; et
un générateur test (304) pour générer une ou plusieurs applications test afin de tester chaque chemin unique identifié à travers les noeuds de la ou des applications vocales,
dans lequel ledit générateur test (304) est configuré pour :
évaluer chaque noeud d'écoute dans chaque chemin identifié pour identifier une grammaire du noeud d'écoute et au moins une invite qui indique à un appelant ce qu'il devrait dire ;
créer un noeud d'écoute dans l'application test pour écouter à la recherche de l'au moins une invite ; et
ajouter un élément de parole à l'application test, ledit élément de parole fournissant une entrée vers l'application vocale en cours de test avec l'entrée attendue telle que définie dans une grammaire générée en tant que fonction de l'élément d'écoute de l'application vocale en cours de test, dans lequel ladite entrée est générée en utilisant une synthèse de la parole à partir du texte.

10. Système selon la revendication 9, dans lequel le dispositif de mémoire est un disque dur.

11. Système selon la revendication 9 ou 10, dans lequel l'analyseur test (302) identifie uniquement des noeuds d'écoute de la ou des applications vocales.

12. Système selon l'une quelconque des revendications 9 à 11, dans lequel le générateur test (304) provoque le stockage de la ou des applications test générées dans le dispositif de mémoire (210).

13. Support lisible par machine avec des instructions sur lui qui, lors de leur exécution, provoquent la réalisation par une machine du procédé selon l'une quelconque des revendications 1 à 8.
